**Europäisches Patentamt**

**European Patent Office**

**Office européen des brevets**

(19)

(11) Veröffentlichungsnummer: **0 233 466**
**B1**

(12) # EUROPÄISCHE PATENTSCHRIFT

(45) Veröffentlichungstag der Patentschrift:
14.11.90

(51) Int. Cl.⁵: **C02F 3/30, C02F 3/10**

(21) Anmeldenummer: **87100377.8**

(22) Anmeldetag: **14.01.87**

(54) **Verfahren zur biologischen Abwasserreinigung.**

(30) Priorität: **21.01.86 DE 3601669**

(43) Veröffentlichungstag der Anmeldung:
**26.08.87 Patentblatt 87/35**

(45) Bekanntmachung des Hinweises auf die Patenterteilung:
**14.11.90 Patentblatt 90/46**

(84) Benannte Vertragsstaaten:
**AT BE CH DE ES FR GB IT LI NL SE**

(56) Entgegenhaltungen:
**EP-A- 0 008 471**
**EP-A- 0 072 495**
**EP-A- 0 075 297**
**DE-A- 3 441 664**

**KORRESPONDENZ ABWASSER, Band 33, Nr. 10, 1986,
Seiten 944-953, GFA, St. Augustin, DE; H. NEUMANN:
"Erfahrungen mit der weitergehenden
Abwasserreinigung bei
Tierkörperbeseitigungsanstalten"**

(73) Patentinhaber: **Linde Aktiengesellschaft,
Abraham-Lincoln-Strasse 21, D-6200 Wiesbaden(DE)**

(72) Erfinder: **Reimann, Hans, Dr.rer.nat.,
Rudolf-Wilke-Weg 21, D-8000 München 71(DE)**
Erfinder: **Fuchs, Uwe, Heiterwanger Strasse 46,
D-8000 München 70(DE)**

(74) Vertreter: **Schaefer, Gerhard, Dr., Linde
Aktiengesellschaft Zentrale Patentabteilung,
D-8023 Höllriegelskreuth(DE)**

## Beschreibung

Die Erfindung betrifft ein Verfahren zur biologischen Abwasserreinigung von organische sowie stickstoffhaltige Verunreinigungen enthaltendem Abwasser, bei dem das Abwasser in einem Reaktor in Gegenwart von auf einem Trägermaterial fixierter Biomasse mit Luft und/oder reinem Sauerstoff begast und anschließend in einer Nachklärung in gereinigtes Wasser und Schlamm aufgetrennt wird und der Schlamm zumindest teilweise in den Reaktor zurückgeführt wird und bei dem in den Reaktor als Trägermaterial für die Mikroorganismen Stoffteilchen in stückiger und/oder granulierter Form und im Abwasser freibeweglicher Menge eingebracht werden.

Ein derartiges Verfahren ist beispielsweise aus der EP-B 15 298 bekannt. Bei diesem Verfahren wird das Abwasser durch einen Reaktor geleitet, der als voll durchmischtes Belebungsbecken mit Umwälzeinrichtung oder als Wirbelbett-oder Schwebebettreaktor ausgebildet ist. Um hohe Reinigungswerte von insbesondere hochbelasteten Abwässern zu erzielen, sind in dem Reaktor Trägerteilchen aus synthetischen organischen Polymerverbindungen bestimmter Größe angeordnet. Außerdem wird zumindest zeitweise Belebtschlamm aus der Nachklärung in den Reaktor zurückgeleitet und in dem Reaktor neben der von den Trägerteilchen fixierten Biomasse auch freier Belebtschlamm aufrechterhalten. Die Trägerteilchen bieten eine große Oberfläche zur Ansiedlung von Mikroorganismen, die aufgrund der Makroporen der Trägerteilchen zu einem dezentralisierten Wachstum gezwungen werden. Hierdurch ergibt sich eine wesentlich vergrößerte Stoffaustauschfläche als bei herkömmlichen Belebtschlammflocken. Die Mikroorganismen sind fest in den Poren der Stoffteilchen angesiedelt und können daher leicht im Reaktor zurückgehalten werden. Damit kann auch bei sehr hoher Abwasserbelastung ein hervorragender $BSB_5$-Abbau erzielt werden. Die angegebene Größe der einzelnen Trägerteilchen (Durchmesser von 5 bis 50 mm, spezifisches Gewicht von 10 bis 200 kg/m³, offene Makroporen von 0,1 bis 3 mm) führt zu stabilen Bakterienansiedlungen und gewährleistet eine Sauerstoffversorgung und einen Stofftransport ins Innere eines jeden Teilchens. Damit wird mit dem bekannten Verfahren in überzeugender Weise eine wirtschaftliche Reinigung $BSB_5$-belasteter Abwässer erzielt. Mit dem bekannten Verfahren kann allerdings nur ein geringer Abbau von Stickstoffverbindungen durchgeführt werden.

Aus der DE-OS 31 31 989 ist ein Verfahren bekannt, mit dem sowohl ein $BSB_5$-Abbau als auch eine Nitrifikation durchgeführt werden kann. Hierzu wird das Abwasser nacheinander durch mehrere Behandlungszonen geleitet und dort in Gegenwart von belebtem Schlamm begast. In der oder den ersten Behandlungszonen wird in bekannter Weise der Abbau der Kohlenstoffverbindungen erreicht, und zwar soweit, daß das abfließende Abwasser-Belebtschlamm-Gemisch nur noch schwach belastet ist. In der oder den letzten Behandlungszonen wird sodann in Gegenwart von auf einem Trägermaterial fixierten nitrifizierenden Bakterien die Nitrifikation durchgeführt. In einer nachfolgenden Nachklärung wird gereinigtes Wasser von Schlamm getrennt und abgezogen. Der Schlamm wird teilweise zur ersten Behandlungszone (C-Abbau) zurückgeführt und zum Teil als Überschußschlamm abgegeben. Es besteht bei diesem bekannten Verfahren auch die Möglichkeit, einen Teil des aus der Nitrifikationszone abfließenden Abwasser-Belebtschlamm-Gemisches vor·der Nächklärung in die erste Behandlungszone (C-Abbau) zurückzuleiten, um eine Denitrifikation des Abwassers durchzuführen. Für einen weitergehenden Abbau der Stickstoffverbindungen ist damit ein hoher Energieaufwand für die Rückführung von Belebtschlamm aus der Nachklärung einerseits und von Abwasser-Belebtschlamm-Gemisch aus der Nitrifikationszone zur $BSB_5$-Abbauzone andererseits erforderlich. Außerdem ist auf diese Art eine vollständige Denitrifikation nicht zu erreichen.

Aus gwf 124 (1983), Heft 9, Seiten 410 bis 427 ist überdies ein Belebungsverfahren mit simultanem Kohlenstoff- und Stickstoffabbau bekannt. In diesem Artikel, der eine Bemessungsmöglichkeit einstufiger Belebungsanlagen für Nitrifikation und Denitrifikation aufzeigt, werden die Abhängigkeit der Nitrifikation bzw. Denitrifikation von Schlammalter, Kohlenstoffatmung und Schlammbelastung behandelt. Der Verfasser des Artikels kommt dabei zu folgendem Ergebnis: Eine optimale Nitrifikation wird bei einer $BSB_5$-Raumbelastung von 0,5 kg/m³ • d erreicht. Soll gleichzeitig eine Denitrifikation durchgeführt werden, so vergrößert sich das Beckenvolumen um etwa 30 % und eine vollständige Stickstofftrennung wird bei einer $BSB_5$-Raumbelastung von 0,3 kg/m³ • d erzielt. Die TKN-Raumbelastung (TKN = Kjeldahl-Stickstoff) für simultane Nitrifikation und Denitrifikation beläuft sich dabei auf etwa 1/4 der $BSB_5$-Raumbelastung, also auf etwa 0,07 kg/m³ • d (TKN-Raumbelastung für Nitrifikation etwa 0,1 kg/m³ • d).

Dem Artikel ist weiterhin zu entnehmen, daß der wesentliche und begrenzende Faktor für die Nitrifikation die vergleichsweise geringe Vermehrungsrate der nitrifizierenden Bakterien ist. Um eine gute Nitrifikationsleistung zu erhalten, muß daher das Schlammalter entsprechend hoch angesetzt werden. Das ganze Beckenvolumen muß überdies ausreichend mit Sauerstoff versorgt werden, wobei üblicherweise die $O_2$-Konzentration mit mindestens 2 mg/l angesetzt wird.

Im Gegensatz zur Nitrifikation, die die Oxidation des $NH_4$-Stickstoffes darstellt,ist die Dentrifikation die Verwendung von Nitrat-Sauerstoff für die Atmung anstelle von gelöstem, d.h. durch die Belüftung eingetragenem Sauerstoff. Bedingung für die Denitrifikation ist somit, daß kein gelöster Sauerstoff vorhanden ist. Dennoch laufen auch bei einem geringen Anteil von gelöstem Sauerstoff, der höchstens 1/4 des für die Nitrifikation erforderlichen $O_2$-Gehaltes ausmacht, Denitrifikationsvorgänge im nitrifizierenden Belebtschlammflocken ab. Insbesondere laufen nach dem Verfasser des Artikels in Oxidationsgräben Denitrifikationsvorgänge ab, da in einem bestimmten Abstand vom Belüfter eben kein gelöster Sauerstoff mehr vorhanden ist.

Das Grundprinzip der Simultan-Denitrifikation besteht laut dem Verfasser darin, daß in einem ungeteilten Belebungsbecken mit Nitrifikation sauerstoff-freie Zonen geschaffen werden, in denen die Denitrifikation erfolgen kann. Dies bedeutet, daß die simultane Denitrifikation auf eine zweckentsprechende Belüftungsregelung hinausläuft. Als Nachteil der Simultan-Nitrifikation/Denitrifikation ist dabei anzusehen, daß die Beckenvolumina größer werden, da in dem Volumen, in dem denitrifiziert wird, wo also kein gelöster Sauerstoff ist, nicht nitrifiziert werden kann und zudem die Denitrifikationsgeschwindigkeit relativ niedrig ist. Um somit geringe Stickstoffwerte im Ablauf einzustellen, muß eine großzügige Bemessung des Nitrifikations-/Denitrifikationsvolumens vorliegen.

Der Erfindung liegt die Aufgabe zugrunde, ein Verfahren der eingangs genannten Art so auszugestalten, daß auf einfache und wirtschaftliche Weise konstant sowohl ein hoher Kohlenstoff- als auch ein hoher Stickstoffabbau erzielt werden kann, wobei die Nachteile der bekannten Verfahren überwunden werden.

Diese Aufgabe wird erfindungsgemäß durch die kennzeichnenden Merkmale des Anspruchs 1 gelöst.

Mit dem erfindungsgemäßen Verfahren wird damit simultan sowohl ein Abbau der Kohlenstoff- als auch der Stickstoffverbindungen in einer einzigen Belebungsstufe durchgeführt, wobei in dem Belebungsbecken freier und auf porösen beweglichen Trägerteilchen fixierter Belebtschlamm vorhanden ist. Die Stickstoffentfernung bedeutet, daß nebeneinander Nitrifikation und Denitrifikation stattfinden, wobei immer gelöster Sauerstoff in dem Belebungsbecken vorhanden ist. Im Gegensatz zu den bekannten Verfahren ist dabei die $BSB_5$-Raumbelastung ebenso wie auch die TKN-Raumbelastung um einiges höher. Dennoch hat sich im Gegensatz zu der in der Fachwelt herrschenden Meinung überraschender Weise gezeigt, daß bei diesen hohen Raumbelastungen und $O_2$-Konzentrationen überragende Reinigungsleistungen erzielt werden.

Das Abwasser ist vor der Behandlung in einem Belebungsbecken allerdings von Grobstoffen zu reinigen, was beispielsweise in einem Rechen oder Absetzbecken geschehen kann.

Das Abwasser wird also nach Befreiung von Grobstoffen in dem Reaktor derart einer Belebtschlammbehandlung unterworfen, daß sowohl die Kohlenstoff- als auch die Stickstoffverbindungen abgebaut werden. Hierzu werden in dem Reaktor Zonen starker und schwacher Belüftung aufrechterhalten. Die Art der Versorgung des Belebungsbeckens mit sauerstoffhaltigem Gas in Form von Luft und/oder technischem Sauerstoff kann in bekannter Weise erfolgen. So kann das sauerstoffhaltige Gas am Boden des Reaktors beispielsweise über eine herkömmliche fein-, mittel- oder grobblasige Begasung eingetragen werden, wobei in Zonen schwacher Belüftung die Sauerstoffzufuhr entsprechend niedriger gehalten wird als in Zonen starker Belüftung.

Die Biomasse, die auf den Trägerteilchen fixiert ist und freie Biomasse wird dabei zweckmäßig zwischen diesen Zonen starker und schwacher Belüftung umgewälzt. Mit dieser Vorgehensweise wird erreicht, daß in der freien Biomasse ein endlicher Gehalt an gelöstem Sauerstoff im ganzen Becken vorhanden ist, die fixierte Biomasse jedoch zeit- oder ortsweise zum Teil anoxischen Verhältnissen unterworfen wird. Die $O_2$-Konzentration wird in Zonen starker Belüftung auf einen Wert zwischen 1 bis 4 mg/l und in Zonen schwacher Belüftung auf einen Wert zwischen 0,5 bis 1 mg/l eingestellt. In Zonen starker Belüftung kann somit vorzugsweise der Kohlenstoffabbau und die Nitrifikation durchgeführt werden, während in Zonen schwacher Belüftung auch Denitrifikationsvorgänge ablaufen.

Für die Bauweise des verwendeten Reaktors kommen die ansich bekannten in Frage. Mit Vorteil kommen längs durchflossene Behandlungsbecken zum Einsatz, die ein Verhältnis Länge/Breite von mindestens drei aufweisen. In diesen werden bevorzugt in der Fließrichtung abwechselnd Zonen starker und schwacher Belüftung eingestellt.

Bei längs durchflossenen Behandlungsbecken wird überdies zweckmäßigerweise ein Anteil des Beckeninhaltes von 20 bis 100 % bezogen auf den Beckendurchfluß vom Ende zum Anfangs des Beckens zurückgeführt. Mit dieser Verfahrensführung kann eine vollständige Denitrifikation des Abwassers sichergestellt werden.

Als Trägerteilchen kommen bei dem erfindungsgemäßen Verfahren Stoffteilchen aus Polyurethan-Weichschaum, Harnstoff/Formaldehydharzen, Polyäthylen, Polyproyplen, Silikonpolymer o.ä. zur Anwendung. Auch Mischungen aus zwei oder mehreren dieser Materialien oder Stoffteilchen aus ähnlichen Stoffen mit offenen Poren, wie sie in der kunststoffverarbeitenden Industrie anfallen, können zum Einsatz gelangen. Das spezifische Gewicht des Trägermaterials beträgt dabei zweckmäßig zwischen 10 und 200 kg/m³.

Nach einer bevorzugten Ausführungsform des erfindungsgemäßen Verfahrens wird dabei ein Verhältnis des mittleren Durchmessers der Trägerteilchen zum mittleren Porendurchmesser von 5 : 1 bis 30 : 1 eingestellt. Mit besonderem Vorzug können in dem Belebungsbecken auch zwei verschiedene Arten von Trägerteilchen mit unterschiedlichen Teilchen- und Porendurchmessern verwendet werden. Als äußerst günstig hat es sich dabei herausgestellt, wenn nach einer weiteren Ausführungsform des erfindungsgemäßen Verfahrens Trägerteilchen mit einem Verhältnis des mittleren Teilchendurchmessers zum mittleren Porendurchmesser von 5 : 1 bis 15 : 1 und Trägerteilchen mit einem Verhältnis des mittleren Teilchendurchmessers zum mittleren Porendurchmesser von 20 : 1 bis 30 : 1 verwendet werden. Wie Untersuchungen nämlich ergeben haben, sind die Teilchen mit einem kleineren Verhältnis von 5 : 1 bis 15 : 1, ins-

besondere 10 : 1 bis 15 : 1 für die Nitrifikation geeignet. Als Beispiel sei hier angeführt, daß würfelförmige Trägerteilchen mit einer Kantenlänge von 5 bis 15 mm besonders geeignet sind für die Nitrifikation. Würfel mit einer Kantenlänge von etwa 20 bis 40 mm, d.h. einem Verhältnis der Durchmesser von 20 : 1 bis 30 : 1 eignen sich dagegen besonders gut für die Denitrifikation. Bei den etwas größeren Trägerteilchen können im Inneren zusätzlich anoxische Zonen erzeugt werden, so daß im Inneren Denitrifikationsvorgänge ablaufen, während auf derAußenseite des Trägerteilchens Nitrifikation und $BSB_5$-Abbau stattfinden. Hierzu sei noch bemerkt, daß diese biologischen Vorgänge auch dann stattfinden, wenn nur eine Sorte von Trägerteilchen eingesetzt wird.

Das erfindungsgemäße Verfahren hat den Vorteil, daß es ein einfaches Ein-Schlammverfahren darstellt, daß die Beckenvolumina im Vergleich zu den bekannten Verfahren kleiner ausgebildet werden können, wodurch sich Einsparungen in den Investitionskosten ergeben, daß Energieeinsparungen bei den Rückführströmen möglich sind, und daß höhere Eliminationsgrade für Stickstoff erreichbar sind. Zum Betrieb eines Belebungsbeckens bzw. eines Beckenteils kann Luft und/oder reiner Sauerstoff zur Anwendung gelangen. Bereits in Betrieb befindliche Anlagen können umgerüstet werden, wenn die erfindungsgemäßen Parameter für die Raumbelastungen, die $O_2$-Konzentration und die Trägerteilchen eingehalten werden.

Im folgenden sei die Erfindung anhand eines schematisch dargestellten Ausführungsbeispiels näher erläutert.

Mit 1 ist ein als volldurchmischtes Belebungsbecken ausgebildeter Reaktor bezeichnet. In dem Belebungsbecken 1 sind, wie durch die Schraffierung angedeutet ist, als Trägermaterial für die Mikroorganismen Stoffteilchen 9 mit einem Durchmesser von etwa 25 mm, einem spezifischen Gewicht von 50 kg/m³ und offenen Poren von 1 mm Durchmesser, insbesondere aus Polyurethan-Weichschaum in einer Menge frei beweglich angeordnet, die einem Volumenanteil von 25 % des Volumens des Belebungsbeckens 1 entspricht.

Das zu behandelnde Abwasser wird über einen Zulauf 2 in das Belebungsbecken 1 eingeleitet, während des behandelte Abwasser über einen im oberen Bereich des Belebungsbeckens 1 angeordneten Ablauf 3, dem eine Trenneinrichtung 4 zum Zurückhalten der einzelnen Stoffteilchen, die beispielsweise ein einfaches Sieb sein kann, abgezogen wird. Der Ablauf 3 des Belebungsbeckens 1 steht mit einer als Absetzbecken ausgebildeten Nachklärung 5 in Verbindung, die eine Ableitung 6 für gereinigtes Abwasser, eine Schlammrückleitung 7 mit Pumpe zur Rückleitung von Schlamm in das Belebungsbecken 1 sowie eine Schlammableitung 8 für Überschußschlamm aufweist.

Das Belebungsbecken 1 kann im Ausführungsbeispiel in vier verschiedene Zonen a, b, c, d unterteilt werden. Jede dieser Zonen,die nicht durch Trennwände o.ä. voneinander abgetrennt sind, weist eine eigene Lufteintragseinrichtung 10a, 10b, 10c, 10d auf. In den Zonen werden die folgenden $O_2$-Konzentrationen durch entsprechende Luftzufuhr aufrechterhalten:
Zone a: 0,5 bis 1 mg/l
Zone b: 1 bis 4 mg/l
Zone c: 0,5 bis 1 mg/l
Zone d: 1 bis 4 mg/l.

Die aus den Lufteintragseinrichtungen aufsteigenden Gasblasen erzeugen genügend Auftrieb, um die mit Biomasse beladenen Stoffteilchen 9, deren spezifisches Gewicht im allgemeinen nur geringfügig über dem von Wasser liegt, in Schwebe zu halten und zwischen den jeweils benachbarten Zonen in ausreichendem Maße umzuwälzen.

An die Beckenzone d ist außerdem eine Leitung 11 mit Pumpe angeschlossen, über die Abwasser-Belebtschlamm-Trägerteilchen-Gemisch in die Zone a zurückgeführt wird. Bei einer Zulaufmenge des Abwassers von Q beträgt dabei die rückgeführte Menge des Abwasser-Belebtschlamm-Trägerteilchen-Gemisches $Q_R = 1 \times Q$. Die Menge des rückgeführten Belebtschlamms aus der Nachklärung läßt sich durch $Q_{RS} = 1 \times Q$ ausdrücken.

Nachstehend sind Zahlenangaben für Auslegungsbeispiel einer nach dem erfindungsgemäßen Verfahren betriebenen Belebungsanlage A im Vergleich zu einer herkömmlichen Belebungsanlage B nach dem Artikel aus gwf und C nach EP-B 75 298 angegeben.

| | | | A | B | C |
|---|---|---|---|---|---|
| Abwasserzulauf | $Q$ | m³/d | 10 000 | 10 000 | 10 000 |
| BSB$_5$-Zulauf | $S_O$ | mg/l | 220 | 220 | 220 |
| abfiltr.Stoffe-Zulauf | $TS_O$ | mg/l | 110 | 110 | 110 |
| TKN-Zulauf | $TKN_O$ | mg/l | 55 | 55 | 55 |
| Schlammkonzentration im Belebungsbecken | $TS_B$ | kg/m³ | 7,0 | 3,0 | 7,0 |
| Temperatur im Belebungsbecken | $T$ | °C | 15 | 15 | 15 |
| Volumen Nitrifikationsbecken | $V_N$ | m³ | – | 3 490 | – |
| Volumen des vorgeschalteten Denitrifikationsbeckens | $V_D$ | m³ | – | 2 000 | – |
| Volumen gesamt | $(V_N+V_D)$ | m³ | 2 200 | 5 490 | 550 |
| Raumbelastung | $B_R$ | kg/m³ d | 1,0 | 0,4 | 4,0 |
| TKN-Raumbelastung | $B_R$-TKN | kg/m³ d | 0,25 | 0,1 | 1,0 |
| TKN-Ablauf | $TKN_e$ | mg/l | 5 | 5 | 44 |
| NO$_3$-N-Ablauf | $NO_3N_e$ | mg/l | 6 | 6 | 0 |
| Rücklaufmenge | RS+R | % | 200 | 600 | 100 |

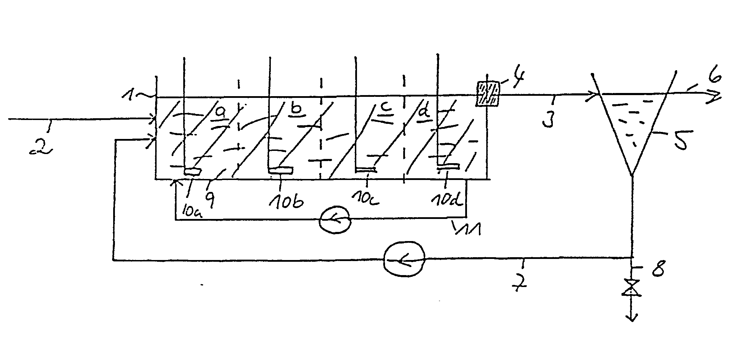

**Patentansprüche**

1. Verfahren zur biologischen Abwasserreinigung von organische sowie stickstoffhaltige Verunreinigungen enthaltendem Abwasser, bei dem das Abwasser in einem Reaktor in Gegenwart von auf einem Trägermaterial fixierter Biomasse mit Luft und/oder reinem Sauerstoff begast und anschließend in einer Nachklärung in gereinigtes Wasser und Schlamm aufgetrennt wird und der Schlamm zumindest teilweise in den Reaktor zurückgeführt wird und bei dem in den Reaktor als Trägermaterial für die Mikroorganismen Stoffteilchen in stückiger und/oder granulierter Form und im Abwasser frei beweglicher Menge eingebracht werden, dadurch gekennzeichnet, daß in dem Reaktor gleichzeitig bei einer BSB5-Raumbelastung von 0,4 bis 2,5 kg/m³ x Tag und einer TKN-Raumbelastung von 0,1 bis 0,8 kg/m³ x Tag ein BSB5-Abbau, eine Nitrifikation und eine Denitrifikation durchgeführt werden, wobei in dem Reaktor Zonen starker und schwacher Belüftung aufrechterhalten werden, die Sauerstoffkonzentration in Zonen starker Belüftung auf einen Wert zwischen 1 und 4 mg/l und in Zonen schwacher Belüftung auf einen Wert zwischen 0,5 und 1 mg/l eingestellt wird und das Trägermaterial 15 bis 35% des Reaktorvolumens einnimmt.

2. Verfahren nach Anspruch 1, dadurch gekennzeichnet, daß frei und fixierte Biomasse zwischen den Zonen starker und schwacher Belüftung umgewälzt wird.

3. Verfahren nach Anspruch 1 oder 2, dadurch gekennzeichnet, daß in einem längsdurchflossenen Behandlungsbecken in Fließrichtung abwechselnd Zonen starker und schwacher Belüftung eingestellt werden.

4. Verfahren nach einem der Ansprüche 1 bis 3, dadurch gekennzeichnet, daß in einem längsdurchflossenen Behandlungsbecken ein Anteil des Beckeninhalts von 20 bis 100% bezogen auf den Beckendurchfluß vom Ende zum Anfang des Beckens zurückgeführt wird.

5

5. Verfahren nach einem der Ansprüche 1 bis 4, dadurch gekennzeichnet, daß ein Verhältnis des mittleren Durchmessers der Trägerteilchen zum mittleren Porendurchmesser von 5 : 1 bis 30 : 1 eingestellt wird.

6. Verfahren nach einem der Ansprüche 1 bis 5, dadurch gekennzeichnet, daß zwei verschiedene Arten von Trägerteilchen mit unterschiedlichen Teilchen- und Porendurchmessern verwendet werden.

7. Verfahren nach Anspruch 6, dadurch gekennzeichnet, daß Trägerteilchen mit einem Verhältnis des mittleren Teilchendurchmessers zum mittleren Porendurchmesser von 5 : 1 bis 15 : 1 und Trägerteilchen mit einem Verhältnis des mittleren Teilchendurchmessers zum mittleren Porendurchmesser von 20 : 1 bis 30 : 1 verwendet werden.

**Claims**

1. A process for the biological purification of sewage containing organic impurities and impurities including nitrogen, wherein the sewage is treated with gas in a reactor in the presence of bio-mass fixed to a carrier material using air and/or pure oxigen and is then separated in a secondary sedimentation stage into purified water and sludge and the sludge is at least partially returned to the reactor and wherein material particles in the form of lumps and/or granules and in a quantity which is freely mobile in the sewage are introduced into the reactor as carrier material for the micro-organisms, characterised in that with a $BSB_5$-volumetric charge of 0.4 to 2.5 kg/m³xday and a TKN-volumetric charge of 0.1 to 0.8 kg/m³xday, a $BSB_5$-decomposition, a nitrification and a denitrification are carried out simultaneously in the reactor, where zones of weak and strong ventilation are maintained in the reactor, the oxygen concentration is set at a value of between 1 and 4 mg/l in zones of strong ventilation and at a value of between 0.5 and 1 mg/l in zones of weak ventilation and where the carrier material occupies 15 to 35% of the reactor volume.

2. A process as claimed in claim 1, characterised in that free and fixed bio-mass is circulated between the zones of strong and weak ventilation.

3. A process as claimed in claim 1 or claim 2, characterised in that zones of strong and weak ventilation are set up in alternation in the direction of flow in a longitudinally traversed treatment tank.

4. A process as claimed in one of claims 1 3, characterised in that in a longitudinally traversed treatment tank a proportion of the tank contents of 20% to 100% relative to the tank throughput is returned from the end to the start of the tank.

5. A process as claimed in one of claims 1 to 4, characterised in that a ratio of the mean diameter of the carrier particles to the mean pore diameter of 5:1 to 30:1 is set.

6. A process as claimed in one of claims 1 to 5, characterised in that two different types of carrier particles having different particle- and pore diameters are used.

7. A process as claimed in claim 6, characterised in that carrier particles with a ratio of the mean particle diameter to the mean pore diameter of 5:1 to 15:1 and carrier particles having a ratio of the mean particle diameter to the mean pore diameter of 20:1 to 30:1 are used.

**Revendications**

1. Procédé de purification biologique d'eaux usées contenant des impuretés organiques ainsi que des dérivés de l'azote, dans lequel les eaux usées contenues dans un réacteur sont traversées par de l'air et/ou de l'oxygène pur en présence de biomasse fixée sur un matériau support et ensuite sont séparées en eau purifiée et en boue par une décantation ultérieure puis l'on recycle, tout au moins partiellement, la boue dans le réacteur et dans lequel on introduit dans le réacteur, en tant que matériau support sur les microorganismes, des particules sous forme de morceaux et/ou de granules pouvant se déplacer librement dans les eaux usées, caractérisé en ce qu'une dégradation de la $BSB_5$, une nitrification et une dénitrification sont mis en œuvre simultanément dans le réacteur, pour une charge spatiale en $BSB_5$ de 0,4 à 2,5 kg/m² par jour et une charge spatiale en TKN de 0,1 à 0,8 kg/m³ par jour, et en ce que l'on entretient dans le réacteur des zones d'aération forte et d'aération faible, la concentration en oxygène dans les zones d'aération forte étant fixée à une valeur comprise entre 1 et 4 mg/l et, dans les zones d'aération faible, à une valeur comprise entre 0,5 et 1 mg/l et le matériau support occupant de 15 à 35% du volume du réacteur.

2. Procédé selon la revendication 1, caractérisé en ce que l'on fait circuler la biomasse libre et la biomasse fixée entre les zones d'aération forte et d'aération faible.

3. Procédé selon la revendication 1 ou 2, caractérisé en ce que, dans un bassin de traitement parcouru suivant sa longueur, sont alternativement établies, dans le sens de l'écoulement, des zones d'aération forte et d'aération faible.

4. Procédé selon l'une quelconque des revendications 1 à 3, caractérisé en ce que, dans un bassin de traitement parcouru suivant sa longueur, une proportion du contenu du bassin de 20 à 100% par rapport au débit dans le bassin est recyclé en passant de l'extrémité aval à l'extrémité amont du bassin.

5. Procédé selon l'une quelconque des revendications 1 à 4, caractérisé en ce que le rapport diamètre moyen des particules/diamètre moyen des pores est compris entre 5/1 et 30/1.

6. Procédé selon l'une quelconque des revendications 1 à 5, caractérisé en ce que l'on utilise deux sortes différentes de particules se distinguant par le diamètre des particules et par le diamètre des pores.

7. Procédé selon la revendication 6, caractérisé en ce que l'on utilise des particules porteuses présentant un rapport diamètre moyen des particules/diamètre moyen des pores compris entre 5/1 et 15/1 et des particules présentant un rapport diamètre moyen des particules/diamètre moyen des pores compris entre 20/1 et 30/1.